# EUROPEAN PATENT SPECIFICATION

(11) **EP 1 463 690 B1**
(45) Date of publication and mention of the grant of the patent: **21.02.2007**
(21) Application number: 02781426.8
(22) Date of filing: 03.12.2002
(51) Int. Cl.: C04B 33/13, C04B 33/08

(54) **BORON-CONTAINING COMPOSITIONS FOR USE IN CLAY BODY, E.G. BRICK, MANUFACTURE**
BOR-ENTHALTENDE ZUSAMMENSETZUNG ZUR VERWENDUNG BEI DER HERSTELLUNG VON TONWAREN
COMPOSITIONS CONTENANT DU BORE UTILISABLES DANS LA FABRICATION DE CORPS EN ARGILE, PAR EXEMPLE DE BRIQUES

(30) Priority: 03.12.2001 GB 0128881
(43) Date of publication of application: 06.10.2004
(73) Proprietor: Castle Colours Limited, Newcastle, Staffordshire ST5 7RH (GB); U.S. BORAX INC., Valencia, CA 91355-1847 (US)
(72) Inventor: STUBBS, Adrian John, Four Marks, Hants. GU34 5AA (GB); EVANS, Michael, Endon, Stoke ST9 9DD (GB)
(74) Representative: Marshall, Monica Anne
(86) International application number: PCT/GB2002/005434
(87) International publication number: WO 2003/048071

(56) References cited:
- WO-A-00/23397
- DE-A- 19 706 743
- GB-A- 2 084 624
- GB-A- 2 300 632
- US-A- 3 031 322
- DATABASE WPI Section Ch, Week 199301 Derwent Publications Ltd., London, GB; Class A11, AN 1993-006666 XP002232223 & KR 9 200 874 B (JEONJU PAPER MFG CO), 30 January 1992 (1992-01-30)
- DATABASE WPI Section Ch, Week 199402 Derwent Publications Ltd., London, GB; Class D22, AN 1994-008053 XP002232222 & BR 9 300 785 A (DA SILVA DIAZ ANDRE A), 28 September 1993 (1993-09-28)

## Description

This invention relates to boron-containing compositions for use in clay body, e.g. brick, manufacture. The description below refers principally to the manufacture of general purpose bricks by way of example. It is to be appreciated that this is for simplicity only and that the invention may be applied to the manufacture of other clay articles, including tile bodies, pipes and pavers.

In brick, and other clay articles, manufacture, wet clay is typically formed into the required shape, dried and then fired. It is known to include additives in the wet clay.

The properties and make-up of clays used in brick manufacture may vary according to the source from which the clay is taken. Soluble salts, particularly sulphates, generally occur naturally in the clay used in brick manufacture. During the drying cycle of bricks, these soluble salts may migrate to the brick surface, and react during the subsequent firing step, to form hard deposits of calcium and magnesium aluminosilicate, which appear as yellowish or whitish discolourations at the surface. This effect, known as scumming, is noticed when using most brick clays and shales.

It is known to include anti-scumming additives in the wet clay. These anti-scumming additives work by various mechanisms. For example barium carbonate, which controls scum in brick and tile bodies by precipitating the naturally occurring soluble sulphates as barium sulphate, is generally used in the industry.

AU 507340 proposes the addition of molasses to wet clay, preferably also with a reagent which reacts with water-soluble calcium and/or magnesium salts to form water-insoluble calcium and/or magnesium salts, to prevent scumming brought about by sodium chloride and by water-soluble calcium and/or magnesium salts naturally occurring in the starting clay.

GB-A-2300632 describes using water-soluble liquid syrup carbohydrates derived from the partial hydrolysis of starch to a DE value of less than 50 as anti-scumming additives in the manufacture of clay articles, such as bricks.

Borates are well known as low temperature fluxes, and are used in a number of industrial applications. In textile fibre glass and glass wool production, the use of borates provides benefits such as reduced melting and liquid temperatures and reduced viscosity. In ceramic glazes the addition of borate permits the thermal expansion of the glaze to be tailored to its particular proposed use.

It has been proposed to add borates, as a source of B₂O₃, to clay to act as fluxing agents. Further borates have been shown previously to reduce the effects of scumming by increasing vitrification at the brick surface.

Due to their fluxing effect, the addition of borates allows the use of broader brick process temperature ranges. In particular they enable the required properties of the final product to be achieved using lower kiln firing temperatures, with associated energy savings, than would normally be required for the clay without fluxing additive. For example, 0.25% and 0.5% by weight B₂O₃ as sodium tetraborate pentahydrate inclusions can mean that 1050°C kiln temperatures can be reduced by 25°C and 50°C respectively. Borates also act as vitrifying agents for clay bodies. Vitrification of a brick body increases brick body density, which leads to improving strength and reducing water absorption. In addition, it modifies the pore size distribution. These effects are beneficial in adding value by improving freeze-thaw properties, reducing efflorescence resulting from migration of soluble salts post-firing and allowing firing temperatures to be reduced.

Borate additions thus enable lower grade clays to be used for fired bodies which exhibit properties which can be compared favourably with those generally attained with higher grade materials. These effects are generally more noticeable the higher the borate addition level.

However, although borate addition provides beneficial effects as described above, it may also be associated with unacceptable changes to brick, or other clay article, appearance, particularly when a water soluble borate is used as additive. For example, the natural red colour of fired bricks generally deepens with increasing borate addition levels; the extent of colour change depending on the borate added, brick clay type and drying conditions. Although the change can be seen as a colour enhancement in some cases, it is generally preferred that a borate addition should make minimal visible changes to the brick surface. Further, during the drying cycle in brick manufacture, moisture migrates through the brick towards the surface, carrying with it any dissolved borates, which result on firing in surface changes to the brick through the formation of a glassy layer. Effects are more marked with soluble, rather than sparingly soluble, borate additives. At high addition levels, bricks may even stick together.

Previous attempts, which have been made to limit borate migration, have involved the use of borate of lower solubility. Sparingly soluble borates are known to be relatively immobile and surface effects are therefore reduced, but not avoided entirely. Naturally occurring insoluble borates are generally unsuitable for use and, while synthetic insoluble borates are available, they are generally too expensive for use in clay body, e.g. brick, manufacture. None of the prior art teaches the prevention of migration of added borate by the use of additional additives. As a result of the surface effects encountered, the use of borate additives in bricks has been limited, and has not been adopted by the industry.

It has now been found that the advantages associated with the use of borate as a clay additive may be achieved, without the disadvantages associated with surface appearance and properties discussed above, if there is used, as additive to clay in the manufacture of clay bodies, such as bricks and tiles, a source of B₂O₃ and a migration inhibitor capable of inhibiting the transport of borate to the surface of clay during its drying, prior to firing.

According to one aspect of the present invention, there is provided the use, as additive to clay in the manufacture of clay bodies, such as bricks and tiles, of (a) a source of B₂O₃, and (b) a migration inhibitor capable of inhibiting the transport of borate to the surface of clay during its drying; components (a) and (b) being added together or separately.

According to a second aspect of the present invention, there is provided a method of manufacture of clay bodies, such as bricks or tiles, which method comprises:
mixing into the starting clay, optionally with added water to achieve the desired plasticity, together or separately, (a) a source of B₂O₃ and (b) a migration inhibitor capable of inhibiting the transport of borate towards the surface of the clay during its drying;
forming the clay into the desired shape;
drying the formed clay bodies; and
firing the dried formed clay bodies.

The conditions of the clay article manufacture are well known. The starting wet clay for forming will generally contain 10 to 30% by weight water. Typically drying of the formed clay bodies is carried out over several hours e.g. 24 to 48 hours, and at temperatures up to 200°C. Firing temperatures are usually in the range 980°C - 1130°C, e.g. 1050°C or could be in the range 1000°C, e.g. 1100°C, to 1200°C.

The source of B₂O₃ used according to the present invention is generally a water soluble borate, e.g. a sodium borate, or boric acid. Most suitably a sodium pentaborate, e.g. sodium pentaborate decahydrate, may be used. In the context of this specification, by the term water soluble borate we mean a borate with a solubility in water greater than 1% by weight at 25°C.

In order to facilitate uniform mixing of the B₂O₃ component with the clay, it is preferable that it be used in solution, in the form of a fine powder, or as an aqueous dispersion or slurry. More preferably the borate is used in the form of an aqueous dispersion or slurry in which the borate particle size is less than 75, e.g. less than 50, or most suitably less than 25 microns. Most preferably the B₂O₃ component comprises microfine crystals suspended in a saturated solution.

The borate migration inhibitor (b) must be capable of inhibiting the transport of borate towards the surface of clay during its drying. That is, in a clay in which borate is transported towards the surface of the clay during its drying, that transport is inhibited, including being prevented, using a borate migration inhibitor according to the invention.

Suitable materials for use as borate migration inhibitors may be organic polymers. The materials which may be used as migration inhibitors include starches, gelatin, sugars including sucrose and fructose, lignosulphonates, particularly calcium lignosulphonate, polyvinyl alcohol, polyethylene glycol, guar gum, xanthan gum, molasses and water-soluble (e.g. liquid syrup) carbohydrates derived from the partial hydrolysis of starch to a DE value of less than 50 as described in GB-A-2300632. The economics of brick manufacture are not such as to support the use of ingredients which are in any way expensive or have a high cost of production. Thus preferred products for use as borate migration inhibitor (b) according to the present invention are low cost materials, typically by-products and secondary materials. Preferred such materials are calcium lignosulphonate, molasses and most particularly the partially hydrolysed starch products.

To facilitate mixing with the clay, the borate migration inhibitor (b) is suitably used as a fine powder, aqueous dispersion or solution.

As mentioned above the actual composition of clays and their properties generally vary according to their source. High quality clays will typically require less borate addition than low quality clays. Thus the amount of component (a) to be incorporated into any particular clay will, at least to some extent, depend upon the make-up of the clay. It will also depend upon e.g. the extent of fluxing and vitrifying action required. Typically the component (a) content in the final clay article, will be such that it provides 0.1 to 1% B₂O₃ by weight based on the weight of the dried clay article. Generally speaking the content will be in the range of 0.15 to 0.6, e.g. 0.5 %, by weight as B₂O₃.

The mechanism by which the component (b) inhibits the transport of the borate during drying of the clay is not entirely understood. It is believed that the inhibitors may form, under the conditions of drying, a physical barrier, which inhibits the transport of the borates. When an organic material, the migration inhibitor (b) will be burned off from the clay article during firing.

The amount of migration inhibitor (b) used will depend upon the amount of borate additive used. It may also depend upon the clay used since different clay types will have generally speaking different borate migration properties, and the presence of materials added to open the clay structure such as sand.

Typically the migration inhibitors are used in an amount such that their ratio, by weight, is from 1 part by weight component (a): 2 parts by weight component (b) to 2 parts component (a): 1 part by weight component (b). Typically the dried clay composition will contain 0.2 to 3% by weight of the inhibitor. Generally, up to 1% by weight or more preferably up to 0.6% inhibitor will be used.

Most preferably the inhibitor used is one which also provides good anti-scumming properties. Thus the most preferred inhibitor is a partially hydrolysed starch product.

As indicated above components (a) and (b) may be added to the wet clay, prior to forming, separately. However it is generally more convenient that the ingredients be added together in a single composition, which may of course also contain any other additive used.

Additionally, it can be advantageous to apply further migration inhibitor, generally in solution or suspension, to the surface of the formed bricks prior to drying. This migration inhibitor will augment the effect of the migration inhibitor within the brick composition.

Accordingly, according to a further aspect of the present invention, there is provided a composition for use as a clay body additive, e.g. in brick or clay tile manufacture, comprising (a) a source of B₂O₃, preferably a water soluble borate, e.g. a sodium borate, and (b) a migration inhibitor capable of inhibiting the transport of borate towards the surface of clay during its drying, in particular during its drying prior to firing of a clay article containing the composition.

The composition may take the form of a fine powder, aqueous dispersion or solution. Preferably the components (a) and (b) are used in the form of a slurry, i.e. a stable suspension having a fine particle size.

The preferred composition for use according to the present invention are aqueous compositions, typically suspensions, containing components (a) and (b) in the following amounts:
20 to 55%, preferably 30 to 50%, e.g. 37%, by weight, based on the total weight of the composition, of component (a); and
15 to 45%, preferably 15 to 35%, e.g. 31%, by weight based on the total weight of the composition, of component (b).

The amount of component (b) in the composition should be such as substantially to prevent the transport of borate towards the surface of clay during its drying. As indicated above, this amount may depend upon the particular clay type being used; some clay types permitting more transport than others. Generally speaking however the proportions of the two components (a) and (b) will be used in the proportions indicated above.

Preferred compositions according to the invention are pourable aqueous borate containing suspensions which contain in suspension sodium pentaborate, as the source of B₂O₃, and a migration inhibitor. Preferably such compositions contain a small proportion of a swellable clay, which assists the pourability of the suspension and maintains its stability in a manner analogous to that reported in International Patent Application WO 00/23397. Such suspensions may have a high borate content on the one hand and on the other hand are pourable making them capable of being easily handable by users. In particular such suspensions may be readily pumped without clogging of pumping equipment.

Suitable swellable clays include the monmorillonite group of clays particularly sodium enriched montmorillonite clays and sodium montmorillonite clays, some of which are known commercially as bentonite, minerals analogous to montmorillonite such as hectorite, and sepiolite.

Suitably, the amount of swellable clay employed in the suspensions as used in the present invention is 0.01 - 3% by weight, based on the total weight of the suspension. Generally, the composition would contain between 0.01 and 1.5% by weight of montmorillonite clays such as 1GB clay minerals available from IMV Nevada. When other clays are used, such as sodium enriched calcium bentonite, e.g. Bentonite MB 300S from Fordimin Company Limited, the amount of swellable clay required may be up to 3% by weight, preferably approximately 2.5% by weight.

A preferred suspension for use according to the present invention comprises:
20 to 55%, e.g. 30 to 55% or 35 to 50%, more preferably 35 to 40%, e.g. 37% by weight sodium pentaborate;
15 to 45%, e.g. 15 to 35% or 20 to 30%, and for example 31%, by weight migration inhibitor, suitably a partially hydrolysed starch;
0.01 to 3% by weight, swellable clay;
the remainder being water.

Such suspensions for use according to the present invention may suitably be prepared by forming sodium pentaborate in suspension, with agitation, in situ by reaction in water of boric acid and sodium tetraborate, typically a hydrated sodium tetraborate, and preferably sodium tetraborate pentahydrate. Swellable clay should be added before the reaction followed by at least one borate migration inhibitor (b).

According to a preferred embodiment, a fluxing composition for incorporation into clays according to the present invention may be prepared by a method which comprises, in aqueous suspension, allowing boric acid and sodium tetraborate, generally in substantially stoichiometric amounts for sodium pentaborate, to react under agitation, and before, during or after the reaction, adding to the suspension or adding the suspension to a swellable clay, also dispersed in water, followed by at least one borate migration inhibitor (b).

According to one preferred embodiment, there is provided a method for preparing a fluxing suspension for use according to the invention, which method comprises dispersing the swellable clay in water, adding boric acid followed by a hydrated sodium tetraborate in substantially stoichiometric amounts for sodium pentaborate, allowing the mixture to react while being agitated and then adding at least one borate migration inhibitor.

The mixing is preferably carried out with a mixing impeller recommended for low-viscosity flow-controlled applications such as the Lightin' A310 impeller available from Lightnin' Mixers Ltd.

The particle sizes of the borate feed stocks are not critical. They may be granular, crystalline or finely divided forms. Alternatively, they may be in the form of wet cakes or slurries.

Preferably the swellable clay is dispersed and hydrated in water according to the manufacturer's recommendations (typically about 10 minutes). After this period the mixture may optionally be heated, e.g. up to about 50°C, e.g. to 35°C to 40°C. Boric acid and sodium tetraborate are then added and the mixture is allowed to react, with agitation, generally for about one half to one and a half hours, i.e. until the coarse particles of the starting materials are essentially all reacted. At no time should there be complete solution of the borate ingredients and sodium pentaborate reaction product. Once the reaction is substantially complete, one or more borate migration inhibitors, in powder, solution or suspension form, are added to the agitated suspension to produce the composition of the invention.

The advantage of this method is that the product comprises a pourable stable suspension wherein there is a high concentration of boron as borate in a finely divided state having particle sizes substantially less than 75 microns without the need for a grinding stage. Indeed particular sizes may be as low as 0.1 to 10 microns.

Typically 0.5 to 5% by weight, preferably 1.0 (e.g. 1.5) to 3.5% by weight, of aqueous composition according to the invention will be added to the wet clay prior to forming.

The invention is further illustrated with reference to the following Examples.

### Example 1

An additive composition was prepared by mixing boric acid (H₃BO₃) with an aqueous suspension of water-soluble liquid syrup carbohydrate derived from the partial hydrolysis of starch to a DE value of less than 50 (Activ-7 ex Castle Clays Ltd. and containing approximately 62% by weight solids) to give a composition comprising 53.3% by weight boric acid and the balance derived from the hydrated starch suspension. The composition was mixed into a clay composition consisting of 58% by weight keuper marl and 42% by weight shale so that the final composition contained 0.6% by weight B₂O₃.

Test bricks were produced from this clay mixture by pressing into a die. The bricks were then dried in a electric drying oven at 40°C for 24hrs followed by 100°C for 24 hrs.

For comparative purposes, bricks were prepared without the additive composition being used.

The dried bricks containing the additive composition were then fired at 1010°C, while the comparative bricks were fired at 1050°C, which is the normal firing temperature for these untreated bricks.

The water absorption and shrinkage properties of the fired bricks were then measured. The bricks containing borate fired at 1010°C had essentially the same properties as the comparative standard bricks fired at 1050°C.

### Example 2

The boric acid-containing composition described in Example 1 was added to a keuper marl clay known to show poor freeze-thaw durability characteristics as described below to give a clay composition containing 0.6% by weight B₂O₃ and bricks were prepared and extruded on a plant scale as follows:

Dry clay taken from a stockpile was introduced into the plant on a conveyor belt. The clay was passed through crushing and grinding stages until the typical particle size was 0.3 - 3 centimetres. Water was added, and at this stage the additive composition described in Example 1 was introduced by means of a regulated peristaltic pump. Mixing continued as the clay went through another milling stage. Finally, additional water was added to raise the moisture content to about 15%, suitable for extrusion. The clay mixture was passed to a vacuum extruder, from which extruded bricks emerged.

The bricks were cut to size and stacked ready for the drying oven. The bricks were dried for 42 hours, where the bricks underwent a temperature ramp from 20-150°C. At this point, dried bricks were taken and fired in a gas-fired testing kiln.

The frost resistance of the fired bricks significantly improved when compared to bricks without borate additions. Using a standard freeze-thaw test rig the number of completed cycles before failures were seen improved from 30 to 85.

### Example 3

A poor quality clay was selected that under normal circumstances is blended with a much more expensive higher quality clay in order to achieve adequate fired properties to make it suitable for use in brick manufacture.

The additive composition described in Example 1 was added to the poor quality clay at a level of 0.6% B₂O₃ using the method described in Example 2.

The formed and dried bricks were then fired 30°C below the standard firing temperature of 1050°C.

When compared with standard bricks containing the additional high quality clay, it was found that the fired properties of the bricks were essentially the same.

### Example 4 (Comparative)

Bricks were formed from a clay composition comprising keuper marl (17 tonnes) and shale (3 tonnes) prepared as described in Example 2. A selection of 30 dried bricks was taken and fired in an electric kiln under laboratory conditions to a peak temperature of between 1000°C and 1020°C i.e. ten bricks fired to a peak temperature of 1000°C, ten to a peak temperature of 1010°C and ten to a peak temperature of 1020°C.

The bricks were then subjected to freeze/thaw testing. Using a standard freeze/thaw test rig, the number of completed cycles before the bricks failed was less than 10 in each case.

### Example 5

Bricks were formed from a clay composition keuper marl (17 tonnes), shale (3 tonnes) and the additive composition of Example 1 (600 kg) prepared as described in Example 2. A selection of 30 dried bricks were taken and fired in an electric kiln under laboratory conditions as described in Example 4.

The bricks were then subjected to freeze/thaw testing. Using a standard freeze/thaw test rig, no bricks had failed after 100 completed cycles.

The appearance of the bricks was visually slightly darker than those of Example 4 but well within quality control limits.

### Example 6 (Comparative)

Boric acid and sodium tetraborate pentahydrate (Na₂B₄O₇.5H₂O) were each added to laboratory test brick compositions at a constant level of 0.25% B₂O₃. The mixtures were pressed into dies and dried such as to promote migration to only one side of the brick. Uni-directional migration was promoted by placing bricks together face-to-face. The pair were then wrapped in plastic, leaving only the two end faces exposed to the air. They are placed in a drying oven at 100°C for 24 hours. Thus, drying occurs only through the faces exposed to the atmosphere. Migration therefore appears at this face only.

The composition of the test bricks (which was formed into 2 test bricks) was as follows:
82.5g shale
27.5g sand
0.16g barium carbonate
0.56g sodium tetraborate pentahydrate or 0.48g boric acid
16.48g water.

The bricks were fired in an electric laboratory kiln with 1°C/min temperature increase to 1050°C. This temperature was held for 60 minutes and then the temperature was reduced at 1.37°C/min to 20°C.

The appearance of the fired bricks showed a very dark, highly glazed surface when compared with untreated bricks.

### Example 7

Additive compositions were prepared by adding 1GB clay (1g) to water (39g) and agitating for 5 minutes. Boric acid (60g) and sodium tetraborate pentahydrate (Neobor ex Borax Europe Limited) (46g) were then added simultaneously to this mixture. The resulting mixture was stirred vigorously in a beaker using an electric laboratory stirrer for about 40 minutes until the mixture had become smooth.

Aqueous suspension of water-soluble liquid syrup carbohydrate (Activ-7 as used in Example 1) (106g) was added as migration inhibitor and the resulting mixture was agitated continuously using a magnetic flea and left overnight.

There was obtained an aqueous suspension having finely divided particles having the following composition (by weight):

| | |
|---|---|
| Sodium pentaborate | 37.2% |
| Carbohydrate | 26.3% |
| IGB Clay | 0.4% |
| Water | 36.1% |

This suspension (1g) in water (15.48g) was agitated for 1 to 2 minutes until completed homogenised.

This mixture was then added slowly to a clay composition containing shale (82.5g), sand (27.5g) and barium carbonate (0.16g) being mixed thoroughly in an electric laboratory mixer.

2 x 55g of the wet clay mixture obtained were pressed into brick shapes using a metal die.

The bricks were then dried and fired as described in Example 6.

Compared with Example 6 using no borate migration inhibitor, it was found that the additive used here substantially eliminated the adverse effects of borate migration. Instead of a very dark, glazed surface, the brick samples had surface appearances similar to untreated bricks i.e. without any sign of glazing.

Similar results were observed, using as borate migration inhibitor, equivalent amounts of polyvinyl alcohol, polyethylene glycol, gelatin, sucrose, fructose, molasses, potato starch, and calcium lignosulphonate.

### Example 8

Example 7 was repeated but prior to drying, Activ-7 (0.5g) was distributed over the exposed surface of each sample. The samples were then dried and fired.

The appearance of the bricks after firing was essentially the same as samples that had not had any borate addition.

### Example 9

Four different additive compositions containing between 25% by weight sodium pentaborate/ 41 % migration inhibitor and 37% by weight sodium pentaborate / 30.5% migration inhibitor (the balance being water) were added to a carboniferous coal measure shale known to show poor efflorescence characteristics as described below to give a clay composition containing between 0.30% and 0.50% by weight B₂O₃ on a dry clay basis.

The migration inhibitor in each case was Activ-7 as used in Example 1 containing approximately 62% active ingredient.

The additive compositions were as follows (the balance being water)

| **Additive** | **Sodium Pentaborate (% wt)** | **Migration Inhibitor active ingredient (% wt)** |
|---|---|---|
| 1 | 25 | 41 |
| 2 | 31 | 36 |
| 3 | 33 | 34 |
| 4 | 37 | 30.5 |

Dry clay taken from a stockpile was introduced into the plant on a conveyor belt. It was mixed with asphalt sand in the ratio 75% by weight clay / 25% by weight sand. The clay was passed through various crushing and grinding stages until the typical clay particle size was 0.3-3.0 cm. Water is added at a number of points during this process. At this stage one of the additive compositions is added to the mixture by means of a calibrated peristaltic pump. Barium carbonate is also added as standard to this mixture.

Further mixing is carried out in a double-shafted mixer, and then the mixture is transferred to a surge hopper. This feeds a vacuum extruder from which the extruded clay column emerges. The clay column is cut by wires into brick shapes.

The individual bricks are stacked onto kiln cars ready for drying. This process happens in a tunnel drying over a period of about 24 hours. The dried bricks are then fired in a tunnel kiln for about 36 hours to a peak temperature of about 1050°C.

Fired bricks were visually inspected for surface colour and damage. The water absorption and shrinkage of selected bricks was also measured. Selected bricks were also subjected to a proprietary efflorescence test, to quantify the efflorescence performance of the bricks.

It was shown that the higher the level of Activ-7 used, the lower the degree of darkening of surface colour. Also the higher the level of borate, the lower the amount of efflorescence produced by the brick. Overall it was shown that there is an optimum composition of additive such that the level of efflorescence produced by the bricks is minimized, while the prevention of borate migration to the surface is maximized.

## Claims

1. Use, as an additive to clay in the manufacture of clay bodies, such as bricks and tiles, of (a) a source of B₂O₃, and (b) a migration inhibitor capable of inhibiting the transport of borate to the surface of clay during its drying; components (a) and (b) being added together or separately.

2. Use according to Claim 1 wherein component (a) is a boric acid or a sodium borate.

3. Use according to Claim 1 wherein component (a) is sodium pentaborate.

4. Use according to any preceding claim wherein component (b) is a starch, gelatin, sugar, lignosulphonate, polyvinyl alcohol, polyethylene glycol, guar gum, xanthan gum, molasses or a water-soluble carbohydrate derived from the hydrolysis starch to a DE value of less than 50.

5. Use according to any preceding claim wherein the ratio of components (a) and (b) used is from 1 part by weight component (a): 2 parts by weight component (b) to 2 parts by weight component (a): 1 part by weight component (b).

6. Use according to any preceding claim wherein component (a) is used in an amount of 0.15 to 0.6% by weight, based on the dry weight of the clay.

7. Use according to any preceding claim wherein component (b) is used in an amount of 0.2 to 3% by weight, based on the dry weight of the clay.

8. Use according to any preceding claim wherein there is used as additive an aqueous composition comprising.
20 to 55% by weight, based on the total weight of the composition, of component (a); and
15 to 45% by weight, based on the total weight of the composition, of component (b); and
optionally up to 3% by weight swellable clay; the remainder being water.

9. Use according to any preceding claim wherein there is used as additive an aqueous suspension comprising
35 to 40% by weight sodium pentaborate;
15 to 30% by weight component (b); and
0.01 to 3% by weight, swellable clay;
the remainder being water.

10. A method of manufacture of clay bodies, such as bricks or tiles, which method comprises:
mixing into the starting clay, optionally with added water to achieve the desired plasticity, together or separately, (a) a source of B₂O₃ and (b) a migration inhibitor capable of inhibiting the transport of borate towards the surface of the clay during its drying;
forming the clay into the desired shape;
drying the formed clay bodies; and
firing the dried formed clay bodies.

11. A method according to Claim 10 wherein component (a) is a boric acid or a sodium borate.

12. A method according to Claim 10 wherein component (a) is sodium pentaborate.

13. A method according to any of Claims 10 to 12 wherein component (b) is a starch, gelatin, sugar, lignosulphonate, polyvinyl alcohol, polyethylene glycol, guar gum, xanthan gum, molasses or a water-soluble carbohydrate derived from the partial hydrolysis of starch to a DE value of less than 50.

14. A method according to any of Claims 10 to 13 wherein the ratio of components (a) and (b) used is from 1 part by weight component (a): 2 parts by weight component (b) to 2 parts by weight component (a): 1 part by weight component (b).

15. A method according to any of Claims 10 to 14 wherein component (a) is used in an amount of 0.15 to 0.6% by weight, based on the dry weight of the clay.

16. A method according to any of Claims 10 to 15 wherein component (b) is used in an amount of 0.2 to 3% by weight, based on the dry weight of the clay.

17. A method according to any of Claims 10 to 16 wherein there is used as additive an aqueous composition comprising
20 to 55% by weight, based on the total weight of the composition, of component (a); and
15 to 45% by weight, based on the total weight of the composition, of component (b), and
optionally up to 3% by weight swellable clay; the remainder being water.

18. A method according to any of claim 10 to 17 wherein there is used as additive an aqueous suspension comprising
35 to 40% by weight sodium pentaborate;
15 to 30% by weight component (b); and
0.01 to 3% by weight, swellable clay;
the remainder being water.

19. A composition for use as an additive to clay in the manufacture of clay bodies which composition is an aqueous composition consisting of
20 to 55% by weight, based on the total weight of the composition, of (a) a source of B₂O₃, and
15 to 45% by weight, based on the total weight of the composition, of (b) a migration inhibitor capable of inhibiting the transport of borate to the surface of clay during its drying, and
optionally up to 3% by weight swellable clay; the remainder being water.

20. A composition according to Claim 19 which is an aqueous suspension consisting of
35 to 40% by weight sodium pentaborate;
15 to 30% by weight component (b); and
0.01 to 3% by weight, swellable clay;
the remainder being water.

21. A composition according to Claim 19 wherein component (a) is a boric acid or a sodium borate.

22. A composition according to Claim 19 wherein component (a) is sodium pentaborate.

23. A composition according to any of Claims 19 to 22 wherein component (b) is a starch, gelatin, sugar, lignosulphonate, polyvinyl alcohol, polyethylene glycol, guar gum, xanthan gum, molasses or a water-soluble carbohydrate derived from the partial hydrolysis of starch to a DE value of less than 50.

24. A composition according to any of Claims 19 to 23 wherein the ratio of components (a) and (b) used is from 1 part by weight component (a): 2 parts by weight component (b) to 2 parts by weight component (a): I part by weight component (b).

## Patentansprüche

1. Verwendung von (a) einer Quelle von B₂O₃ und (b) eines Migrationsinhibitors, der in der Lage ist, den Transport von Borat an die Oberfläche von Ton während dessen Trocknung zu inhibieren, als Zusatzstoff zu Ton bei der Herstellung von Tonwaren wie etwa Ziegeln und Dachziegeln; wobei die Komponenten (a) und (b) zusammen oder getrennt zugegeben werden.

2. Verwendung gemäß Anspruch 1, wobei Komponente (a) eine Borsäure oder ein Natriumborat ist.

3. Verwendung gemäß Anspruch 1, wobei Komponente (a) Natriumpentaborat ist.

4. Verwendung gemäß einem der vorhergehenden Ansprüche, wobei Komponente (b) eine Stärke, Gelatine, Zucker, Lignosulfonat, Polyvinylalkohol, Polyethylenglykol, Guargummi, Xanthan, Melasse oder ein wasserlösliches Kohlenhydrat ist, das aus der partiellen Hydrolyse von Stärke auf einen DE-Wert von weniger als 50 erhalten wird.

5. Verwendung gemäß einem der vorhergehenden Ansprüche, wobei das Verhältnis der verwendeten Komponenten (a) und (b) zwischen 1 Gewichtsteil Komponente (a) : 2 Gewichtsteile Komponente (b) und 2 Gewichtsteile Komponente (a) : 1 Gewichtsteil Komponente (b) liegt.

6. Verwendung gemäß einem der vorhergehenden Ansprüche, wobei Komponente (a) in einer Menge von 0,15 bis 0,6 Gew.-%, basierend auf dem Trockengewicht des Tons, verwendet wird.

7. Verwendung gemäß einem der vorhergehenden Ansprüche, wobei Komponente (b) in einer Menge von 0,2 bis 3 Gew.-%, basierend auf dem Trockengewicht des Tons, verwendet wird.

8. Verwendung gemäß einem der vorhergehenden Ansprüche, wobei als Zusatzstoff eine wässrige Zusammensetzung verwendet wird, die
20 bis 55 Gew.-%, basierend auf dem Gesamtgewicht der Zusammensetzung, von Komponente (a); und
15 bis 45 Gew.-%, basierend auf dem Gesamtgewicht der Zusammensetzung, von Komponente (b); und
wahlweise bis zu 3 Gew.-% quellfähigen Ton
umfasst, wobei der Rest Wasser ist.

9. Verwendung gemäß einem der vorhergehenden Ansprüche, wobei als Zusatzstoff eine wässrige Suspension verwendet wird, die
35 bis 40 Gew.-% Natriumpentaborat;
15 bis 30 Gew.-% Komponente (b); und
0,01 bis 3 Gew.-% quellfähigen Ton
umfasst; wobei der Rest Wasser ist.

10. Herstellungsverfahren für Tonwaren wie etwa Ziegel oder Dachziegel, wobei das Verfahren umfasst:
Zumischen, zusammen oder getrennt, von (a) einer Quelle von B₂O₃ und (b) einem Migrationsinhibitor, der in der Lage ist, den Transport von Borat zur Oberfläche des Tons während dessen Trocknung zu verhindern, in einen Ausgangston, dem wahlweise Wasser zugesetzt wurde, um die gewünschte Plastizität zu erzielen;
Bringen des Tons in die gewünschte Form;
Trocknen der geformten Tonwaren; und
Brennen der getrockneten, geformten Tonwaren.

11. Verfahren gemäß Anspruch 10, wobei Komponente (a) eine Borsäure oder ein Natriumborat ist.

12. Verfahren gemäß Anspruch 10, wobei Komponente (a) Natriumpentaborat ist.

13. Verfahren gemäß einem der Ansprüche 10 bis 12, wobei Komponente (b) eine Stärke, Gelatine, Zucker, Lignosulfonat, Polyvinylalkohol, Polyethylenglykol, Guargummi, Xanthan, Melasse oder ein wasserlösliches Kohlenhydrat ist, das aus der partiellen Hydrolyse von Stärke auf einen DE-Wert von weniger als 50 erhalten wird.

14. Verfahren gemäß einem der Ansprüche 10 bis 13, wobei das Verhältnis der verwendeten Komponenten (a) und (b) zwischen 1 Gewichtsteil Komponente (a) : 2 Gewichtsteile Komponente (b) und 2 Gewichtsteilen Komponente (a) : 1 Gewichtsteil Komponente (b) liegt.

15. Verfahren gemäß einem der Ansprüche 10 bis 14, wobei Komponente (a) in einer Menge von 0,15 bis 0,6 Gew.-%, basierend auf dem Trockengewicht des Tons, verwendet wird.

16. Verfahren gemäß einem der Ansprüche 10 bis 15, wobei Komponente (b) in einer Menge von 0,2 bis 3 Gew.-%, basierend auf dem Trockengewicht des Tons, verwendet wird.

17. Verfahren gemäß einem der Ansprüche 10 bis 16, wobei als Zusatzstoff eine wässrige Zusammensetzung verwendet wird, die
20 bis 55 Gew.-%, basierend auf dem Gesamtgewicht der Zusammensetzung, von Komponente (a); und
15 bis 45 Gew.-%, basierend auf dem Gesamtgewicht der Zusammensetzung, von Komponente (b); und
wahlweise bis zu 3 Gew.-% quellfähigen Ton
umfasst, wobei der Rest Wasser ist.

18. Verfahren gemäß einem der Ansprüche 10 bis 17, wobei als Zusatzstoff eine wässrige Suspension verwendet wird, die
35 bis 40 Gew.-% Natriumpentaborat;
15 bis 30 Gew.-% Komponente (b); und
0,01 bis 3 Gew.-% quellfähigen Ton
umfasst; wobei der Rest Wasser ist.

19. Zusammensetzung zur Verwendung als Zusatzstoff zu Ton bei der Herstellung von Tonwaren, wobei die Zusammensetzung eine wässrige Zusammensetzung ist, bestehend aus
20 bis 55 Gew.-%, basierend auf dem Gesamtgewicht der Zusammensetzung, von (a) einer Quelle von B₂O₃, und
15 bis 45 Gew.-%, basierend auf dem Gesamtgewicht der Zusammensetzung, von (b) einem Migrationsinhibitor, der in der Lage ist, den Transport von Borat an die Oberfläche von Ton während dessen Trocknung zu inhibieren, und
wahlweise bis zu 3 Gew.-% quellfähigem Ton,
wobei der Rest Wasser ist.

20. Eine Zusammensetzung gemäß Anspruch 19, die eine wässrige Suspension ist, bestehend aus
35 bis 40 Gew.-% Natriumpentaborat;
15 bis 30 Gew.-% Komponente (b); und
0,01 bis 3 Gew.-% quellfähigem Ton;
wobei der Rest Wasser ist.

21. Zusammensetzung gemäß Anspruch 19, wobei Komponente (a) eine Borsäure oder ein Natriumborat ist.

22. Zusammensetzung gemäß Anspruch 19, wobei Komponente (a) Natriumpentaborat ist.

23. Zusammensetzung gemäß einem der Ansprüche 19 bis 22, wobei Komponente (b) eine Stärke, Gelatine, Zucker, Lignosulfonat, Polyvinylalkohol, Polyethylenglykol, Guargummi, Xanthan, Melasse oder ein wasserlösliches Kohlenhydrat ist, das aus der partiellen Hydrolyse von Stärke auf einen DE-Wert von weniger als 50 erhalten wird.

24. Zusammensetzung gemäß einem der Ansprüche 19 bis 23, wobei das Verhältnis der verwendeten Komponenten (a) und (b) zwischen 1 Gewichtsteil Komponente (a) : 2 Gewichtsteile Komponente (b) und 2 Gewichtsteile Komponente (a) : 1 Gewichtsteil Komponente (b) liegt.

## Revendications

1. Utilisation, comme additif à une argile dans la fabrication de corps en argile, tels que des briques et des dalles, de (a) une source de B₂O₃, et (b) un inhibiteur de migration capable d'inhiber le transport du borate jusqu'à la surface de l'argile pendant son séchage ; les composants (a) et (b) étant ajoutés ensemble ou séparément.

2. Utilisation selon la revendication 1 dans laquelle le composant (a) est un acide borique ou un borate de sodium.

3. Utilisation selon la revendication 1 dans laquelle le composant (a) est du pentaborate de sodium.

4. Utilisation selon l'une quelconque des revendications précédentes dans laquelle le composant (b) est un amidon, une gélatine, un sucre, un lignosulfonate, l'alcool polyvinylique, le polyéthylèneglycol, la gomme de guar, la gomme de xanthane, la mélasse ou un glucide soluble dans l'eau dérivé de l'hydrolyse partielle de l'amidon jusqu'à une valeur DE inférieure à 50.

5. Utilisation selon l'une quelconque des revendications précédentes dans laquelle le rapport des composants (a) et (b) utilisé est de 1 partie en poids de composant (a)/ 2 parties en poids de composant (b) à 2 parties en poids de composant (a)/ 1 partie en poids de composant (b).

6. Utilisation selon l'une quelconque des revendications précédentes dans laquelle le composant (a) est utilisé dans une quantité de 0,15 à 0,6 % en poids, par rapport au poids sec de l'argile.

7. Utilisation selon l'une quelconque des revendications précédentes dans laquelle le composant (b) est utilisé dans une quantité de 0,2 à 3 % en poids, par rapport au poids sec de l'argile.

8. Utilisation selon l'une quelconque des revendications précédentes dans laquelle on utilise comme additif une composition aqueuse comprenant
de 20 à 55 % en poids, par rapport au poids total de la composition, du composant (a) ; et
de 15 à 45 % en poids, par rapport au poids total de la composition, du composant (b) ; et
optionnellement jusqu'à 3 % en poids d'argile capable de gonfler,
le reste étant de l'eau.

9. Utilisation selon l'une quelconque des revendications précédentes dans laquelle on utilise comme additif une suspension aqueuse comprenant
de 35 à 40 % en poids de pentaborate de sodium ;
de 15 à 30 % en poids de composant (b) ; et
de 0,01 à 3 % en poids d'argile capable de gonfler;
le reste étant de l'eau.

10. Procédé de fabrication de corps en argile, tels que des briques ou des dalles, lequel procédé comprend :
le mélange dans l'argile de départ optionnellement avec addition d'eau pour obtenir la plasticité souhaitée, ensemble ou séparément, (a) d'une source de B₂O₃ et (b) d'un inhibiteur de la migration capable d'inhiber le transport du borate vers la surface de l'argile pendant son séchage ;
la formation de l'argile dans la forme souhaitée ;
le séchage des corps en argile formés ; et
la cuisson des corps en argile formés séchés.

11. Procédé selon la revendication 10 dans lequel le composant (a) est un acide borique ou un borate de sodium.

12. Procédé selon la revendication 10 dans lequel le composant (a) est du pentaborate de sodium.

13. Procédé selon l'une quelconque des revendications 10 à 12 dans lequel le composant (b) est un amidon, une gélatine, un sucre, un lignosulfonate, l'alcool polyvinylique, le polyéthylèneglycol, la gomme de guar, la gomme de xanthane, la mélasse ou un glucide soluble dans l'eau dérivé de l'hydrolyse partielle de l'amidon jusqu'à une valeur DE inférieure à 50.

14. Procédé selon l'une quelconque des revendications 10 à 13 dans lequel le rapport des composants (a) et (b) utilisé est de 1 partie en poids de composant (a)/ 2 parties en poids de composant (b) à 2 parties en poids de composant (a)/ 1 partie en poids de composant (b).

15. Procédé selon l'une quelconque des revendications 10 à 14 dans lequel le composant (a) est utilisé dans une quantité de 0,15 à 0,6 % en poids, par rapport au poids sec de l'argile.

16. Procédé selon l'une quelconque des revendications 10 à 15 dans lequel le composant (b) est utilisé dans une quantité de 0,2 à 3 % en poids, par rapport au poids sec de l'argile.

17. Procédé selon l'une quelconque des revendications 10 à 16 dans lequel on utilise comme additif une composition aqueuse comprenant
de 20 à 55 % en poids, par rapport au poids total de la composition, du composant (a) ; et
de 15 à 45 % en poids, par rapport au poids total de la composition, du composant (b), et
optionnellement jusqu'à 3 % en poids d'argile capable de gonfler,
le reste étant de l'eau.

18. Procédé selon l'une quelconque des revendications 10 à 17 dans lequel on utilise comme additif une suspension aqueuse comprenant
de 35 à 40 % en poids de pentaborate de sodium ;
de 15 à 30 % en poids de composant (b) ; et
de 0,01 à 3 % en poids d'argile capable de gonfler ;
le reste étant de l'eau.

19. Composition pour une utilisation comme additif à une argile dans la fabrication de corps en argile, laquelle composition est une composition aqueuse constituée par
de 20 à 55 % en poids, par rapport au poids total de la composition, de (a) une source de B₂O₃, et
de 15 à 45 % en poids, par rapport au poids total de la composition, de (b) un inhibiteur de migration capable d'inhiber le transport du borate jusqu'à la surface de l'argile pendant son séchage, et
optionnellement jusqu'à 3 % en poids d'argile capable de gonfler,
le reste étant de l'eau.

20. Composition selon la revendication 19 qui est une suspension aqueuse constituée par
de 35 à 40 % en poids de pentaborate de sodium ;
de 15 à 30 % en poids de composant (b) ; et
de 0,01 à 3 % en poids d'argile capable de gonfler ;
le reste étant de l'eau.

21. Composition selon la revendication 19 dans laquelle le composant (a) est un acide borique ou un borate de sodium.

22. Composition selon la revendication 19 dans laquelle le composant (a) est du pentaborate de sodium.

23. Composition selon l'une quelconque des revendications 19 à 22 dans laquelle le composant (b) est un amidon, une gélatine, un sucre, un lignosulfonate, l'alcool polyvinylique, le polyéthylèneglycol, la gomme de guar, la gomme de xanthane, la mélasse ou un glucide soluble dans l'eau dérivé de l'hydrolyse partielle de l'amidon jusqu'à une valeur DE inférieure à 50.

24. Composition selon l'une quelconque des revendications 19 à 23 dans laquelle le rapport des composants (a) et (b) utilisé est de 1 partie en poids de composant (a) / 2 parties en poids de composant (b) à 2 parties en poids de composant (a)/ 1 partie en poids de composant (b).
